## Europäisches Patentamt
## European Patent Office
## Office européen des brevets

(19)

(11) Publication number: **0 022 106**
**B1**

(12) **EUROPEAN PATENT SPECIFICATION**

(45) Date of publication of patent specification: **03.08.83**

(51) Int. Cl.³: **F 21 Q 3/00, B 64 F 1/20**

(21) Application number: **80850091.2**

(22) Date of filing: **13.06.80**

(54) **A light device, especially for airports and roads.**

(30) Priority: **27.06.79 DE 2925842**

(43) Date of publication of application:
**07.01.81 Bulletin 81/1**

(45) Publication of the grant of the patent:
**03.08.83 Bulletin 83/31**

(84) Designated Contracting States:
**AT BE CH FR GB IT LI LU NL SE**

(56) References cited:
**DE - B - 1 158 916**
**GB - A - 966 357**
**US - A - 3 096 024**

(73) Proprietor: **Meta-Fer AG**
**Gottfried Kellerstrasse 7**
**CH-8001 Zürich (CH)**

(72) Inventor: **Dahlberg, Anders**
**Flyghamnsvägen 22**
**S-183 64 Täby (SE)**

(74) Representative: **Modin, Jan et al,**
**c/o Axel Ehrners Patentbyra AB Box 5342**
**S-102 46 Stockholm (SE)**

Courier Press, Leamington Spa, England.

A light device, especially for airports and roads

The invention relates to a light device, especially for airports and roads, comprising at least one light source disposed in a casing having a light pervious, substantially flat cover, from which a light beam, generated by the light source, emerges.

Airports normally utilize special light devices for marking the centre lines on take-off and landing runways as well as taxiways. Similar devices, so called guidelights, are also mounted on the parking places of an airport.

The requirements on such light devices which are normally mounted as units, are strict and can in practice only be fulfilled at considerable costs. The light devices of this kind must emit a well-defined light beam in a certain direction, particularly at a very small angle to the ground, and they also have to be reliable in operation and be resistant to dirt, rain, snow, ice and rough treatment, e.g. in connection with snow clearance. However, these light devices often cause difficulties in that the bulbs or light sources develop much heat which results in the melting of snow and the forming of ice.

So far, generally two types of such light devices have been used, namely, on the one hand, open, flat devices and, on the other hand, closed, protruding devices. The open, flat type (mostly provided with slots) permits the use of steel scrapers in case of snow clearance in order to clean the runways satisfactorily and to meet the demands regarding braking action of aircrafts. This type, however, needs to be cleaned at short intervals by means of special equipment. The other type, i.e. the closed, protruding type, requires the use of rubber scrapers for snow clearance, and therefore the demands on braking action will not always be met. Moreover, the use of rubber scrapers over the runway surface will often result in a non-uniform clearance. Therefore, in such cases, it is necessary to additionally spread out sand and urea and to carry out blow sweeping to an increased extent. An advantage of the latter type of device is that it does not need to be cleaned as often as the open, flat type.

There is also known (see US—A—3 096 024) a light device of a closed, substantially flat type with a cover consisting of a transparent material and having a substantially planar external surface and a stepped internal surface. The light source is arranged in such a way that the light rays emitted therefrom enter the stepped surface portions of the inside of the cover substantially at right angles, and the inclination of the stepped surface portion and the refractive index of the cover material are so adapted that the light rays, upon refraction at the external surface of the cover, emerge therefrom at a desired small angle.

However, the light beam obtainable from this known device is not narrow enough and may cause an inconvenient glare even at rather great vertical angles.

Another light device known from DE—B—1 158 916 is provided with a cover consisting of a number of upright prisms disposed next to each other and being separated by vertical reflective layers. The device is designed to provide a high intensity light bundle at low angles with a runway surface, but the emitted light rays will not be confined within a narrow beam.

The object of the invention is to accomplish a light device of the closed, flat type, similar to the device known from US—A—3 096 024 but providing a well-defined, narrower light beam at a desired small angle.

This object is achieved in that the

a) the cover consists of a plurality of inclined discs of transparent material, the discs being oriented obliquely and joined together with light absorbing or light reflecting interface layers;

b) the outer ends of said discs are levelled into a substantially planar external surface, whereas the inner ends of the discs constitute the stepped internal surface; and

c) said light absorbing or light reflecting interface layers are mutually parallel and oriented substantially at right angles to the stepped internal surface portions, so that light rays impinging at oblique angles onto the surface portions will be cancelled out by absorption in the interface layers or by total reflection at the planar external surface of the cover.

Hereby, it is possible to achieve a well-defined emitted light beam of high intensity. The losses due to reflection at each interface are reduced to a minimum.

Even if a colour filter is inserted in the beam path, the intensity of the emitted light beam can be of such a high value that, in spite of the use of a relatively weak light source, the international standards can be satisfied.

As compared to the known light devices provided with slots, a further advantage of the inventive device is that it is possible to achieve a certain, although relatively diffuse light distribution sideways. Hereby, a marking light can be made visible even from the side, e.g. in curves, crossing taxiways or the like.

In the inventive light device, only exactly parallel light rays can emerge from the light source, since the non-parallel rays will be "filtered out" by absorption or reflection (and subsequent total reflection at the top, planar surface of the cover). A conventional parabolic reflector has turned out to be sufficient to obtain a substantially parallel light beam. The total manufacturing costs of the light device can therefore be kept down at a favourably low level. Thanks to the additional advantages mentioned above, the operational costs can also be considerably reduced in comparison with the prior art light devices.

A preferred embodiment of the invention will be described further below with reference to the drawings.

Fig. 1 shows schematically a light device as seen from above;

Fig. 2 shows a central section through the device shown in Fig. 1;

Fig. 3 shows, in a larger scale, a partial longitudinal section through the cover of the device, illustrating the paths of various light rays; and

Fig. 4 shows a corresponding longitudinal section through the cover of a modified embodiment having interposed aluminium layers.

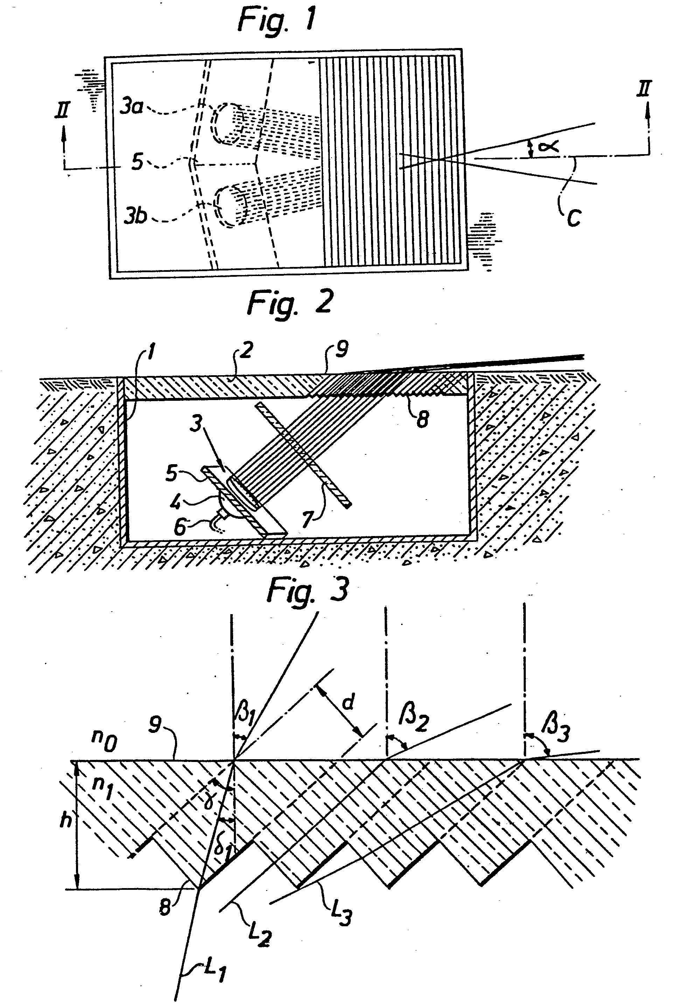

The light device shown in Figs. 1 and 2 comprises a box-like casing 1, which is installed in the ground in such a way that the upper surface of its transparent cover 2 is aligned with the ground surface. In the illustrated example, the light device serves as a marking light on the centre line of a take off or landing runway or a taxiway at an airfield. The device could be used as well on roads or high ways or generally at any place where a well-defined light beam is desired.

In the casing 1, two light sources (e.g. light bulbs) 3a, 3b are mounted with conventional parabolic reflectors 4 on a bracket 5 fastened at the side-walls of the casing. The electrical supply conductors 6 of the light sources are connected to an external cable (not shown) preferably via a fuse, so that the light sources can be energized from a central power source. In the illustrated example, each light source may have a power of appr. 50 Watts. The two light sources 3a, 3b (see Fig. 1) are disposed on each side of the longitudinal centre line C of the device, and directed obliquely upwards. The light beams emitted from the two light sources emerge towards the centre line C at an angle $\alpha$, so that the light beam emerging from the light device has an aperture angle of appr. $2\alpha$.

In case coloured light is desired, e.g. green light for marking the centre line of a runway, a colour filter 7 can be inserted in the path of the beam between the light source 3 and the casing cover 2.

As appears from Fig. 2, the light beams propagate obliquely upwards towards the cover 2. The latter is made of a transparent material, preferably a clear epoxi resin. According to the invention the underside or internal surface 8 of the transparent cover 2 is formed with steps, whereas the external surface 9 of the cover is flat or planar. The design of the two surfaces 8 and 9 is such that the light rays (compare ray $L_2$ in Fig. 3) emitted from the light source 3 impinge substantially at right angle on the stepped surface portions of the inside of the cover and are refracted away from the normal at the external surface of the cover. In this way, it is possible to obtain an emerging light beam which, in spite of only a small reduction of intensity, propagates almost along the ground surface.

The stepped internal surface 8 of the cover can be produced by making the cover 2 of identical plates or discs, which are oriented obliquely and joined together by fusion or glueing.

The side opposite to the stepped surface is then filled out with a clear epoxi resin and/or ground to become smooth, so that a fully planar external surface 9 of the cover is obtained. The interfaces between the discs (indicated by dashed lines in Fig. 3) are light absorbing or reflecting, e.g. in the form of fabric reinforcement strips, in order to secure that scattered light rays cannot pass over from one disc into an adjacent one. The emitted light beam will in this way be strictly limited between two definite angles in the vertical plane relative to the normal, these angles being designated as $\beta_1$ and $\beta_3$ in Fig. 3 for the two extreme light rays $L_1$ and $L_3$. For a given value of the refractive index $n_1$ (=1.47 for the epoxi plastic of the kind referred to above, whereas the refractory index of air is assumed to be 1,00) it is possible to adapt the thickness h of the cover 2 and the thickness d of each disc in such a way that the light beam emitted from the cover lies between the desired angles $\beta_1$ and $\beta_3$.

On the basis of the relatively simple geometry in Fig. 1 and the Schnell law of refraction, the following relationships can be obtained:

$$\text{disc inclination angle } \gamma = \text{arc sin} \frac{\sin \beta_2}{n_1} \quad (1)$$

$$\text{disc thickness d} = \frac{h \times \tan (\gamma - \sigma_1)}{\cos \sigma_1} \quad (2)$$

$$\text{maximum angle of beam } \sigma_1 = \text{arc sin} \frac{\sin \beta_1}{n_1} \quad (3)$$

Assuming the values:

$n_1 = 1.47$
$h = 15.0$ mm
$d = 0.98$

the relationships (1), )2) and (3) will give:

$\gamma = 42,8°$
$\sigma_1 = 40.0°$
$\beta_1 = 71.0°$
$\beta_2 = 87.0°$

The maximum light intensity of the emitted beam is thus obtained at an angle of 3° relative to the ground surface. The maximum angle (for the ray $L_1$) is only 19° relative to the ground surface.

The discs constituting the cover 2 function as Venetian blinds, although the impinging light beam is refracted towards the plane of the cover.

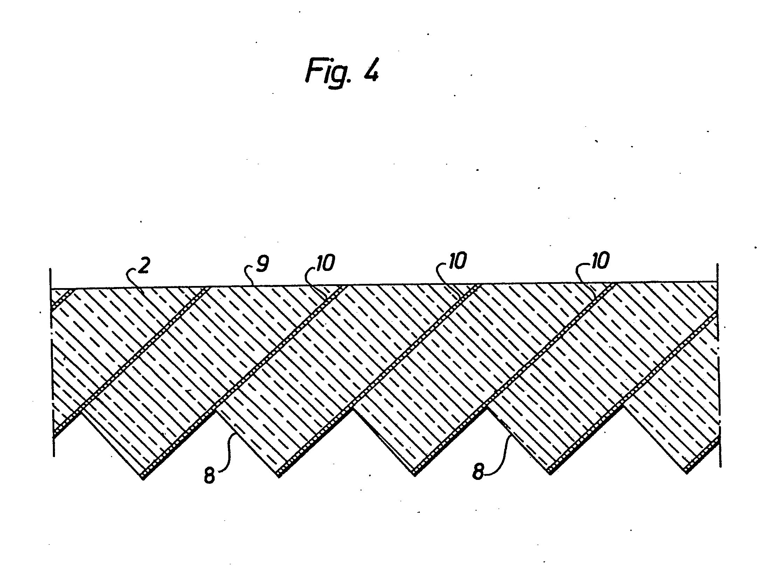

In the embodiment of Fig. 4, thermally conducting metal layers, preferably sheets 10 of aluminium, are inserted between the inclined discs of the cover. These metal layers will hereby secure an effective transfer of heat away from the inside of the casing, which is important, since the light sources will necessarily emit a great deal of heat apart from the visible light. By leading away the heat to the ambient air, the risk of overheating is reduced, and more powerful light sources can be installed, if desired or required.

In other modified embodiments of the invention, it may be sufficient to place only one light source 3 in the casing 1. If two light sources 3a and 3b are used, the emission direction of each light source in the horizontal plane may be different in order to achieve the desired beam distribution, either symmetrically ($2\alpha$ according to Fig. 1) or assymetrically, the latter example being applicable in curves of taxiways or the like.

Finally, it is advantageous to embed granular particles (not shown) into the material forming the cover 2, especially at the external surface 9. The upper edges of such particles are preferably located in the ground level.

### Claims

1. A light device, especially for airports and roads, comprising at least one light source (3) disposed in a casing (1) having a light pervious, substantially flat cover (2), from which a light beam generated by the light source emerges, said cover (2) consisting of a transparent material and having a substantially planar external surface (9) and a stepped internal surface (8), and the light source (3) being arranged in such a way that the light rays ($L_2$) emitted therefrom enter the stepped surface portions of the inside of the cover substantially at right angles, the inclination of the stepped surface portions and the refractive index of the cover material being so adapted that the light rays, upon refraction at the external surface (9) of the cover, emerge therefrom at a desired small angle, characterized in that

a) the cover (2) consists of a plurality of inclined discs of said transparent material, the discs being oriented obliquely and joined together with light absorbing or light reflecting interface layers;

b) the outer ends of said discs are levelled into said substantially planar external surface (9), whereas the inner ends of said discs constitute said stepped internal surface (8); and

c) said light absorbing or light reflecting interface layers are mutually parallel and oriented substantially at right angles to the stepped internal surface portions (8), so that light rays impinging at oblique angles onto said surface portions will be cancelled out by absorption in said interface layers or total reflection at said planar external surface (9) of the cover.

2. A device as set forth in claim 1, characterized in that inclined layers (10) of thermally conducting material are inserted in the cover (2).

3. A device as set forth in claim 1 or 2, characterized in that said light absorbing or light reflecting interface layers are formed by fabric reinforcement strips.

### Revendications

1. Dispositif lumineux, notamment pour aérodromes et routes, comportant au moins une source lumineuse (3) disposée dans une enveloppe (1) ayant un couvercle sensiblement plat et perméable à la lumière (2), d'où émerge un faisceau lumineux engendré par la source lumineuse, ledit couvercle (2) étant composé d'un matériau transparent et ayant une surface externe sensiblement plane (9) et une surface interne à gradins (8), et la source lumineuse (3) étant agencée de manière telle que les rayons lumineux ($L_2$) qu'elle émet pénètrent dans les parties de surface en gradin de l'intérieure du couvercle sensiblement à angle droit, l'inclinaison des parties de surface en gradin et l'indice de réfraction du matériau du couvercle étant agencés en sorte que les rayons lumineux, après réfraction sur la surface externe (9) du couvercle, en émergent sous un angle faible souhaité, caractérisé en ce que

a) le couvercle (2) est composé d'une pluralité de disques inclinés en ledit matériau transparent, les disques étant orientés obliquement et réunis les uns aux autre par des couches d'interface absorbant la lumière ou réfléchissant la lumière;

b) les extémitées extérieures desdits disques sont nivelées pour constituer ladite surface externe sensiblement plane (9), tandis que les extrémités intérieures desdits disques constituent ladite surface interne en gradins (8); et

c) lesdites couches d'interface absorbant la lumière ou réfléchissant la lumière sont parallèles entre elles et orientées quasi perpendiculairement aux parties de surface interne en gradin (8), de sorte que des rayons lumineux frappant obliquement lesdites parties de surface se trouvent annulés par absorption dans lesdites couches d'interface ou réflexion totale sur ladite surface externe plane (9) du couvercle.

2. Dispositif selon la revendication 1, caractérisé en ce que des couches inclinées (10) de matériau conducteur de la chaleur sont insérées dans le couvercle (2).

3. Dispositif selon la revendication 1 ou 2, caractérisé en ce que lesdites couches d'interface absorbant la lumière ou réfléchissant la lumière sont formées par des bandes de renfort en étoffe.

**Patentansprüche**

1. Eine Beleuchtungsvorrichtung, insbesondere für Flugplätze und Straßen, mit mindestens einer in einem Gehäuse (1) angeordneten Lichtquelle (3), wobei das Gehäuse einen lichtdurchlässigen, im wesentlichen flachen Deckel (2) hat, aus dem ein durch die Lichtquelle erzeugtes Lichtbündel austritt, der Deckel (2) aus transparentem Material besteht und eine im wesentlichen planare Außenfläche (9) und eine abgestufte Innenfläche (8) aufweist, wobei die Lichtquelle (3) in solcher Weise angeordnet ist, daß die aus ihr austretenden Lichtstrahlen $(L_2)$ in die abgestuften Flächenteile der Deckelinnenseite unter im wesentlichen rechten Winkeln eintreten, und wobei die Neigung der abgestuften Flächenteile und der Brechungsindex des Deckelmaterials so angepaßt sind, daß die Lichtstrahlen bei Brechung an der Außenfläche (9) des Deckels aus diesem unter einem gewünschten kleinen Winkel austreten können, dadurch gekennzeichnet, daß

a) der Deckel (2) aus einer Mehrzahl geneigter Scheiben aus dem transparenten Material besteht, die Scheiben schräg ausgerichtet und mit lichtabsorbierenden oder lichtreflektierenden Zwischenlagen miteinander verbunden sind;

b) die äußeren Stirnseiten der Scheiben in die im wesentlichen planare Außenfläche (9) einnivelliert sind, während die inneren Stirnseiten der Scheiben die abgestufte Innenfläche (8) bilden; und

c) die lichtabsorbierenden oder lichtreflektierenden Zwischenlagen zueinander parallel und im wesentlichen rechtwinklig zu den abgestuften Innenflächenteilen (8) ausgerichtet sind, so daß Lichtstrahlen, die unter schiefen Winkeln auf diese Flächenteile auftreffen, durch Absorption in den Zwischenlagen oder Totalreflexion an der planaren Außenfläche (9) des Deckels aufgehoben werden.

2. Eine Vorrichtung nach Anspruch 1, dadurch gekennzeichnet, daß geneigte Lagen (10) aus thermisch leitendem Material in den Deckel (2) eingesetzt sind.

3. Eine Vorrichtung nach Anspruch 1 oder 2, dadurch gekennzeichnet, daß die lichtabsorbierenden oder lichtreflektierenden Zwischenlagen aus Stoffverstärkungsstreifen gebildet sind.

## Fig. 1

## Fig. 2

## Fig. 3

# Fig. 4